# EUROPEAN PATENT APPLICATION

(11) **EP 0 823 806 A1**
(43) Date of publication of application: **11.02.1998**
(21) Application number: 96202245.5
(22) Date of filing: 09.08.1996
(51) Int. Cl.: H04M 1/57

(54) **Device for converting the format of calling line identification signals**

(71) Applicant: Koninklijke PTT Nederland N.V., 9726 AE Groningen (NL)
(72) Inventor: Pieterse, Rob, c/o KPN Research, 2264 XZ Leidschendam (NL)
(74) Representative: Beitsma, Gerhard Romano

(57) **Abstract**

The invention provides a device (1) for converting call identification (CLI) data from a first (e.g. European) format to a second (e.g. US) format. To this end, the device (1) comprises line monitoring means (3) for monitoring the telecommunications line (2), receiving means (4) for receiving calling line identification signals, detection means (5) for detecting an incoming call, processing means (6) for processing the received calling line identification signals and for converting the signals from the first format to the second format without substantially altering the CLI data proper, and output means (7) for outputting the converted signals. Such a device (1) allows generally available CLI equipment to be used, even in environments using deviating signalling protocols.

## Description

### BACKGROUND OF THE INVENTION

The present invention relates to a device for converting calling line identification formats. More in particular, the present invention relates to a device for converting call identification data corresponding with a first network specification into call identification data corresponding with a second, different network specification, the data proper in principle remaining unaltered.

Calling line identification (CLI), also known as calling number indication (CNI) or calling line identification and presentation (CLIP), is a service which is now offered by many telephone companies, especially in North America. The service involves the sending, in conjunction with a call alert (ring) signal, of data identifying the calling party. The called party may then, when provided with a suitable telephone set or CLI unit, read the originating number of the incoming call from a display before answering the call, i.e. during call set-up. Some dedicated telephone sets even contain a list of frequently called (or calling) numbers with the corresponding names, thus allowing a name to be shown in the display of the set when a call of a known party comes in.

The introduction of calling line identification (CLI) in various countries by different telecommunications companies involves large costs, as both the telephone switches and the consumer equipment need to be adapted for CLI. This is aggravated by the fact that different telephone administrations have different criteria with respect to CLI, e.g. different data formats and/or different signalling protocols, resulting in different technical specifications of the service. This in turn leads to different equipment for different countries, thus increasing the cost of consumer equipment and consequently disadvantageously influencing the acceptance of the service.

### SUMMARY OF THE INVENTION

It is an object of the invention to overcome the above-mentioned and other disadvantages of the prior art and to provide a device which allows CLI to be offered by different telephone companies having different technical requirements while employing substantially identical consumer equipment.

It is a further object of the present invention to offer a device for home and office use which is inexpensive and which can be used in combination with existing telephone sets and CLI equipment.

It is another object of the present invention to provide a device which allows use to be made of CLI equipment commercially available in large markets, such as the North American market.

To this end, the present invention provides a device for converting calling line identification signals transmitted over a telecommunications line, the device comprising:
- monitoring means for monitoring the telecommunications line,
- receiving means for receiving calling line identification signals,
- detection means for detecting an incoming call,
- processing means for processing the received calling line identification signals and for converting the signals from a first format to a second format, and
- output means for outputting the converted signals.
The CLI signals are thus subjected to a format conversion, i.e. a conversion of the control part of the CLI message. The actual CLI data, i.e. the data identifying the number of the incoming call, are substantially left unaltered.

By means of the device according to the invention, it is possible to convert calling line identification signals from a first format (e.g. the Dutch format) into a second format (e.g. the US format). This enables consumers to purchase CLI equipment designed for the second (e.g. US) format, which equipment may be readily available at low cost. The design and manufacture of dedicated equipment for a relatively small market where the first (e.g. Dutch) format is used thus becomes superfluous.

### BRIEF DESCRIPTION OF THE DRAWINGS

The invention will further be explained with reference to the accompanying drawings, in which:
Fig. 1 schematically shows an embodiment of the device according to the present invention.
Fig. 2 schematically shows an example of formats of calling line identification signals.
Fig. 3 schematically shows a state diagram representing the control of the device of Fig. 1.
Fig. 4 schematically shows an advantageous housing of the device according to the present invention.

### EXEMPLARY EMBODIMENTS

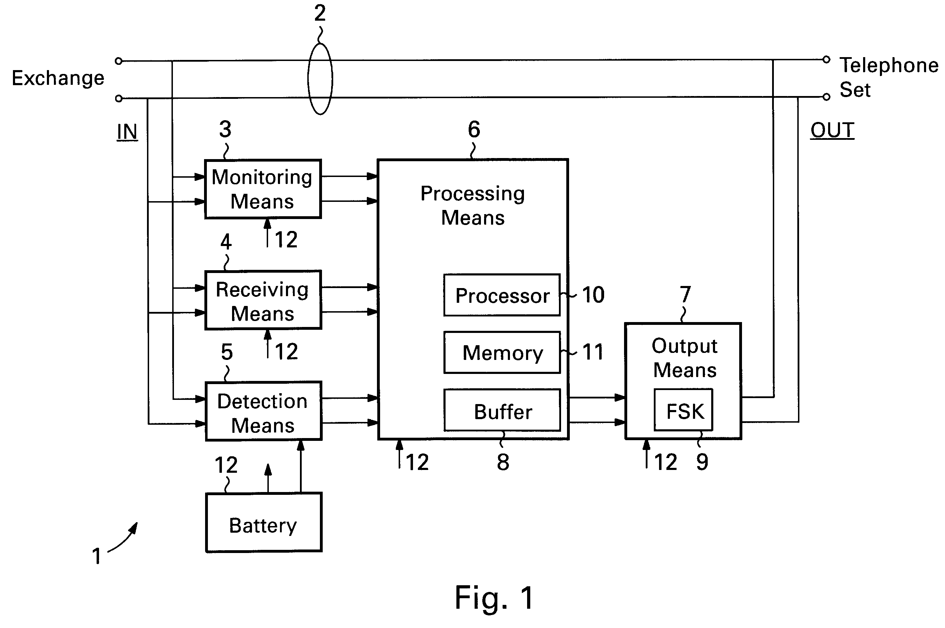

The embodiment of the device shown schematically and by way of example in Fig. 1 comprises monitoring means 3 for monitoring the telecommunications line 2, receiving means 4 for receiving calling line identification data, detection means 5 for detecting an incoming call, processing means 6 for processing the received calling line identification signals (i.e. CLI data and one or more control sequences) and for converting the signals from a first format to a second format, and output means 7 for outputting the converted signals.

The monitoring means 3, the receiving means 4 and the detection means 5 are connected in parallel to both the two-wire line 2 (at "IN") and to the processing means 6. The output means 7 are connected to the processing means 6 and the line 2 (at "OUT").

Between the points indicated by "IN" and "OUT" interruption means (not shown) may be inserted in the line 2 to avoid CLI signals having an incorrect format from being passed to the telephone set. In most cases, however, CLI signals having an incorrect format will not disturb the telephone set (or separate CLI device), so that the line 2 need not be interrupted.

In the preferred embodiment of Fig. 1, the line monitoring means 3 are arranged for monitoring the polarity of the line 2. A change in polarity of the wires of line 2 indicates in some telephone systems an incoming call.

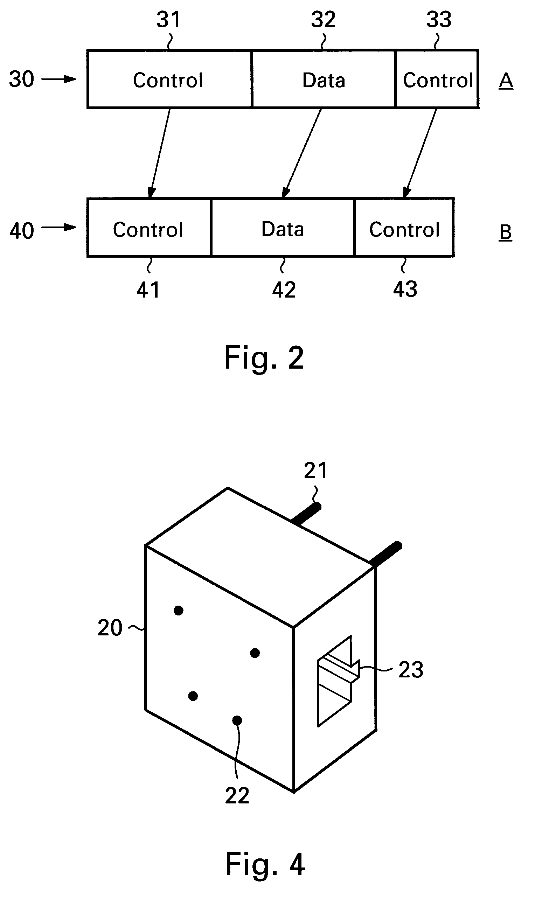

The receiving means 4 are arranged for receiving DTMF signals and for putting these signals into digital form. The detection means 5 are arranged for detecting a ring signal. The processing means 6 may comprise a microprocessor 10 and a memory 11. Alternatively, a so-called finite state machine may be implemented by means of a e.g. PAL (Programmable Logic Array). The processing means 6 may also comprise a buffer 8 for buffering data contained in the CLI message (30 in Fig. 2).

The output means 7 comprise a frequency generator 9 for producing FSK (Frequency Shift Keying) signals in response to data provided by the processing means 6.

The device 1 may comprise a power source 12, such as a (removable) battery, for powering the electronic components. Advantageously, however, the device 1 is powered by the line 2, a capacitor being provided as energy buffer to bridge interruptions in the line voltage.

Advantageously, the electronic components 3, 4, 5, 6, and 7 are integrated in an application-specific integrated circuit (ASIC).

It will be understood that the use of the device according to the present invention is not limited to CLI. The device may also be used for other telecommunications services, such as "call waiting" where a called party, when engaged in a call, is notified of another incoming call.

A conversion of CLI data from a first format (e.g. the Dutch format) into a second format (e.g. the US format) is schematically shown in Fig. 2. A message 30 of first format A comprises CLI signals. The signals of the message 30 are, in the present example, DTMF signals. The message 30 is constituted by first control signals 31, data signals 32 and second control signals 33. The data signals 32 contain the actual CLI information, i.e. the number of the calling line. The beginning of the data signals 32 may be indicated by a DTMF code "D", while the end of data signals 32 may be indicated by a DTMF code "C". The control signals 31 may begin with a polarity change of the wires of the line (2 in Fig. 1). Similarly, the control signals 33 may also comprise a polarity change to indicate the end of the control sequence. Other control signals may be e.g. ringing signals. Changes in the AC or DC resistance may also be considered to constitute control signals, the actual use and constitution of the control parts 31 and 33 of the message 30 being determined by the signalling protocols employed by the telecommunications company in question.

A message 40 of second format B also comprises CLI signals. The signals of the message 40 are, in the present example, FSK signals. The message 40 is constituted by first control signals 41, data signals 42 and second control signals 43. The data signals 42 contain the actual CLI information, i.e. the number of the calling line. If the second format B is the format employed in the United States, the first control part 41 of the message 40 is constituted by a message header comprising a message type field and a message length field. These fields, as the actual message fields constituting the data part 41, are digitally represented by frequency shift keying, a 1200 Hz signal representing a "mark" (logical 1) and a 2200 Hz signal representing a "space" (logical 0). The message type field and message length fields are preceded by a channel seizure signal (a sequence of logical ones and zeros during 250 ms) and a conditioning signal (a sequence of logical ones during 150 ms). It should be noted that in the US format, the second control part 43 comprises a checksum of one word (8 bits).

The control sequences (control signals 31 and 33) are thus subjected to a protocol conversion, while the data signals 32 merely undergo a change of signal representation. In the example shown, the data signals 32 are DTMF (Dual Tone Multiple Frequency) signals, which are transformed into corresponding FSK (Frequency Shift Keying) signals 42. It will be understood that the contents of the data signals 32, i.e. the number represented by the data signals, are not changed.

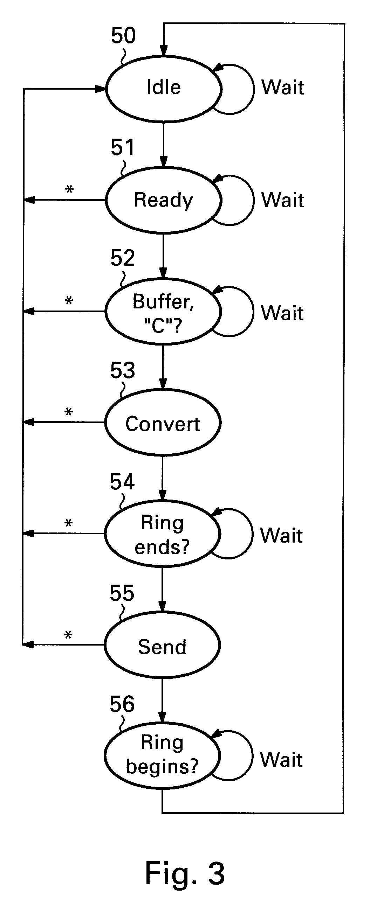

The state diagram shown in Fig. 3 represents the control of the processing unit of the device 1 of Fig. 1, specifically in case CLI signals are converted from the Dutch format to the US format.

Control starts with a idle state 50. In this idle state, it is checked whether the line monitoring means 3 detect a change in the line, e.g. a polarity change, indicating an oncoming call. As long as the line monitoring means detect no change, control remains in idle state 50. When a change (i.e. of polarity) occurs, control assumes a subsequent state, i.e. ready state 51.

In ready state 51, the device is ready to receive calling line identification data, e.g. suitable DTMF signals, in the first format. In the preferred embodiment, the device waits in this state for a DTMF signal "D" to occur. As long as this signal does not occur, control remains in state 51. When a DTMF "D" occurs, control assumes state 52.

In state 52 the CLI data contained in the DTMF (Dual Tone Multiple Frequency) signals are stored in the buffer 8. Control remains in state 52 as long as no DTMF "C" signal occurs. The check for a DTMF "C" signal may be made by the processing means 6 in response to signals produced by the DTMF receiver (receiving means) 4.

In state 53, the contents of the buffer 8 are converted from the first format into the second format and stored again in buffer 8. Also, the converted control sequences 31 and 33 (as shown in Fig. 2) may be stored, as control sequences 41 and 43, in buffer 8.

The subsequent state 54 is a wait state which is maintained as long as the ringing (as detected by detection means 5) does not stop. As soon as the ringing stops, control assumes the next state, i.e. state 55.

In state 55 the control sequence 41 (in Fig. 2), the (converted) contents of buffer 8 (data 42 in Fig. 2), and the control sequence 43 (in Fig. 2) are sent to the line 2. Control subsequently assumes state 56, in which is waited for ringing to commence (as explained with reference to Fig. 2, CLI data are sent to the telephone or CLI set between the first and second ringing signal). Control subsequently returns to idle state 50.

It should be noted that control may return from each state to idle state 50 when a polarity change (in general: a line change as detected by the monitoring means 3) occurs. This return path is indicated in Fig. 3 by an asterisk (*).

Fig. 4 shows an example of a suitable housing of the device 1 of the present invention. Preferably, the device according to the invention is designed so as to fit in a telecommunications wall outlet. The housing 20 comprises pins 21 (plug) for insertion into a (European) wall socket. The housing 20 further comprises a corresponding female connector (socket) 22, as well as a US-style female plug 23 (type RJ12) for connecting a telephone set. All the electronic parts and connections, as shown in Fig. 1, are contained in the housing 20. The particular plug-in housing 20 of Fig. 4 is easy to use and inexpensive.

It will be understood by those skilled in the art that the embodiments described above are given by way of example only and that many modifications and additions are possible without departing from the scope of the present invention.

## Claims

1. Device (1) for converting calling line identification signals transmitted over a telecommunications line (2), the device comprising:
- monitoring means (3) for monitoring the telecommunications line (2),
- receiving means (4) for receiving calling line identification data,
- detection means (5) for detecting an incoming call,
- processing means (6) for processing the received calling line identification signals and for converting the signals from a first format to a second format, and
- output means (7) for outputting the converted signals.

2. Device according to claim 1, wherein the processing means (6) are arranged for converting the calling line identification signals by converting control signals while leaving data signals substantially unaltered.

3. Device according to claim 1 or 2, wherein the line monitoring means (3) are arranged for monitoring the polarity of the line (2).

4. Device according to claim 1, 2 or 3, wherein the receiving means (4) are arranged for receiving DTMF signals.

5. Device according to claim 4, wherein the processing means (6) comprise a buffer (8) for buffering calling line identification data.

6. Device according to any of the preceding claims, wherein the detection means (5) are arranged for detecting a ring signal.

7. Device according to any of the preceding claims, wherein the processing means (6) comprise a microprocessor (10) and a memory (11), or a finite state machine implemented by means of a programmable logic array.

8. Device according to any of the preceding claims, wherein the output means (7) comprise a frequency generator (9) for producing FSK signals.

9. Device according to any of the preceding claims, wherein the electronic components (3, 4, 5, 6, 7) are integrated in an application-specific integrated circuit (ASIC).

10. Device according to any of the preceding claims, designed so as to fit in a telecommunications wall outlet, comprising connector pins (21) and at least one female connector (22; 23).
